(19) Europäisches Patentamt
European Patent Office
Office européen des brevets

(11) **EP 1 439 146 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
*C01B 31/00* $^{(2006.01)}$    *C01B 31/04* $^{(2006.01)}$
*C09K 21/12* $^{(2006.01)}$

(21) Anmeldenummer: **03104539.6**

(22) Anmeldetag: **04.12.2003**

(54) **Verfahren zur Steuerung der Expansionseigenschaften von thermisch expandierbaren Schwefelsäure-Graphitpartikeln und deren Verwendung**

Control process of expansion properties of thermally expansible graphite-sulfuric acid particles and their use.

Procédé de contrôle des caractéristiques d'expansion de particules graphite-acide sulfurique thermo-expansibles et leur utilisation

(84) Benannte Vertragsstaaten:
**AT BE BG CH CY CZ DE DK EE ES FI FR GB GR HU IE IT LI LU MC NL PT RO SE SI SK TR**

(30) Priorität: **05.12.2002 DE 10256963**

(43) Veröffentlichungstag der Anmeldung:
**21.07.2004 Patentblatt 2004/30**

(73) Patentinhaber: **HILTI Aktiengesellschaft
9494 Schaan (LI)**

(72) Erfinder:
• **Reinheimer, Arne
87668, Zellerberg (DE)**
• **Wenzel, Antje
86928, Hofstetten (DE)**

(74) Vertreter: **Wildi, Roland
Hilti Aktiengesellschaft,
Corporate Intellectual Property
Feldkircherstrasse 100
Postfach 333
9494 Schaan (LI)**

(56) Entgegenhaltungen:
**EP-A- 1 323 670**      **US-A- 4 083 885**

• **PATENT ABSTRACTS OF JAPAN Bd. 018, Nr. 381 (C-1226), 18. Juli 1994 (1994-07-18) & JP 06 107405 A (CHUO KASEI KK; others: 01), 19. April 1994 (1994-04-19)**
• **J. LALANCETTE, J. LAFONTAINE: J.CHEM. SOC., CHEM. COMM, Bd. 21, 1973, Seite 815, XP002389746**

**Beschreibung**

Die vorliegende Erfindung betrifft ein Verfahren zur Steuerung der Expansionseigenschaften von thermisch expandierbaren Schwefelsäure-Graphitpartikeln und die Verwendung der in dieser Weise erhältlichen Schwefelsäure-Graphitpartikel als intumeszierendes Brandschutzadditiv für die Herstellung von Flammschutz-Zusammensetzungen zum Beispiel für Brandschutz-Abdichtungen von Durchbrüchen, Durchführungen und sonstigen Öffnungen in Wänden, Böden und/oder Decken von Gebäuden.

Thermisch expandierbare Schwefelsäure-Graphitpartikel beziehungsweise teilchenförmiger, thermisch expandierbarer Schwefelsäure-Graphit ist auch als Blähgraphit bekannt und im Handel erhältlich. Es handelt sich dabei um Teilchen, die zwischen den Gitterschichten des kristallinen Graphits eingelagerte Fremdbestandteile (Intercalate) enthalten. Solche expandierbaren Graphit-Intercalationsverbindungen werden üblicherweise dadurch hergestellt, daß man Graphitteilchen in einer Lösung dispergiert, die ein Oxidationsmittel und die einzulagernde Gastverbindung enthält. Üblicherweise angewandte Oxidationsmittel sind Salpetersäure, Kaliumchlorat, Chromsäure, Kaliumpermanganat und dergleichen. Als einzulagernde Verbindung wird bei Schwefelsäure-Graphitpartikeln konzentrierte Schwefelsäure eingesetzt.

Ein Verfahren zur Herstellung solcher Schwefelsäure-Graphitpartikel ist beispielsweise aus der US-Patentschrift 4,091,083 bekannt, welches darin besteht, daß man kristalline Graphitteilchen in Schwefelsäure dispergiert, die Mischung unter Zugabe von Wasserstoffperoxid rührt und das Rühren so lange fortsetzt, bis die Schwefelsäure in den Graphit eingelagert worden ist. Anschließend wird die überschüssige Säure abgetrennt, die in dem Festprodukt vorhandene restliche Säure durch mehrfaches Waschen mit Wasser entfernt und das Material getrocknet.

Die Graphit-Intercalationsverbindungen und damit auch Schwefelsäure-Graphitpartikel unterliegen beim Erhitzen auf eine Temperatur oberhalb der sogenannten Onset-Temperatur einer starken Volumenzunahme mit Expansionsfaktoren von mehr als 200, die dadurch verursacht wird, daß die in der Schichtstruktur des Graphits eingelagerte Intercalatverbindung durch das schnelle Erhitzen auf diese Temperatur unter Bildung gasförmiger Stoffe zersetzt wird, wodurch die Graphitpartikel senkrecht zur Schichtebene expandieren und aufgebläht werden. Dieses Expansionsverhalten wird beispielsweise in intumeszierenden Massen ausgenützt, die insbesondere zur Brandschutz-Abdichtung von Kabeln- und Rohrdurchführungen durch Wände und Decken von Gebäuden eingesetzt werden. Im Brandfall erfolgt nach dem Erreichen der Onset-Temperatur eine Ausdehnung der Graphitteilchen und damit der die Durchführung abdichtenden intumeszierenden Masse, so daß auch nach dem Abbrennen der durch die Durchführung geführten Kabel-Isolierungen und/oder Kunststoffrohre der Durchbruch des Feuers durch die Durchführung verhindert beziehungsweise verzögert wird.

Die Onset-Temperatur ist als die Temperatur definiert, bei der der thermische Expansionsprozeß des intumeszierenden Systems, also hier der thermisch expandierbaren Schwefelsäure-Graphitpartikel beginnt, das heißt die Temperatur zu Beginn des Expansionsvorganges. Die herkömmlichen und im Handel erhältlichen Blähgraphittypen verfügen lediglich über sehr eingeschränkte Onset-Temperaturen von ca. 150°C, ca. 160°C, ca. 200°C. Darüber hinaus sind sie im Hinblick auf ihr Expansionseigenschaften, das heißt also das Expansionsvolumen, die Expansionsgeschwindigkeit im Bereich des Onset, die Temperaturen bei denen ein Prozentsatz des maximalen Expansionsvolumens erreicht ist und des mittleren Expansionskoeffizienten, festgelegt.

Das Dokument JP6107405 offenbart ein Verfahren zur Herstellung von thermisch expandierbaren Graphit mit einem steuerbaren Ausdehnungskoeffizient mittels eines Vertreters der Aminosäuren oder der Phenole, der während der Umsetzung von Graphit mit Schwefelsäure und Wasserstoffperoxyd als Reaktions-Inhibitor benützt wird.

Es besteht jedoch ein starkes Bedürfnis dafür, diese Expansionseigenschaften von thermisch expandierbaren Graphitpartikeln gezielt beeinflussen zu können, um eine bessere Anpassung an die bei der speziellen Anwendung anzustrebenden Eigenschaften zu ermöglichen, namentlich bei der Anwendung solcher Graphitpartkel als intumeszierende Brandschutzadditive für die Herstellung von Flammschutz-Zusammensetzungen. Zu diesem Anwendungszweck wäre es erwünscht, eine größere Variationsbreite der oben angesprochenen Expansionseigenschaften solcher Graphitteilchen gezielt zu ermöglichen.

Die Aufgabe der vorliegenden Erfindung besteht also darin, ein Verfahren anzugeben, mit dem es möglich wird, in einfacher Weise die Expansionseigenschaften von thermisch expandierbaren Schwefelsäure-Graphitpartikeln gezielt zu beeinflussen, namentlich im Hinblick auf das Expansionsvolumen, die Expansionsgeschwindigkeit und den mittleren Expansionskoeffizienten.

Es hat sich überraschenderweise gezeigt, daß diese Aufgabe dadurch gelöst werden kann, daß durch Waschen der durch Umsetzung von Graphitteilchen mit Schwefelsäure in Gegenwart eines Oxidationsmittels hergestellten Schwefelsäure-Graphitpartikel mit einer wässrigen Waschflüssigkeit die bestimmte, die Expansionseigenschaften beeinflussende Verbindungen enthält, das Expansionsverhalten gezielt beeinflußt werden kann.

Demzufolge wird die oben genannte Aufgabe gelöst durch das Verfahren gemäß Hauptanspruch. Die Unteransprüche betreffen bevorzugte Ausführungsformen dieses Erfindungsgegenstandes sowie die Verwendung der mit Hilfe dieses Verfahrens erhältlichen, thermisch expandierbaren Schwefelsäure-Graphitpartikel als intumeszierendes Brandschutzadditiv für die Herstellung von Flammschutz-Zusammensetzungen, insbesondere intumeszierende Massen beispielsweise für Brandschutz-Abdichtungen von Durchbrüchen, Durchführungen und sonstigen Öffnungen in Wänden, Böden und/oder Decken von Gebäuden.

Die vorliegende Erfindung betrifft daher ein Verfahren zur Steuerung der Expansionseigenschaften von thermisch expandierbaren Schwefelsäure-Graphitpartikeln, das dadurch gekennzeichnet ist, daß man die durch Umsetzung von Graphitpartikeln mit Schwefelsäure in Gegenwart eines Oxidationsmittels hergestellten Schwefelsäure-Graphitpartikel mit einer die Expansionseigenschaften beeinflussende Verbindungen enthaltenden wässrigen Waschflüssigkeit bis zu einem pH-Wert im Bereich von 2 bis 8, vorzugsweise 3 bis 7, gemessen in der von den gewaschenen Schwefelsäure-Graphitpartikeln abgetrennten Waschflüssigkeit, wäscht und dann trocknet.

Vorzugsweise wendet man bei der Herstellung der Schwefelsäure-Graphitpartikel ein Verhältnis von Schwefelsäure zu Oxidationsmittel im Bereich von 200:1 bis 1:100, vorzugsweise im Bereich von 100:1 bis 1:1 an. Als Oxidationsmittel lassen sich neben Wasserstoffperoxid, anorganische Peroxide, Iodate. Bromate, Braunstein, Permanganate, Perchlorate, Cr(IV)-Verbindungen, Peroxodisulfate, Halogene, Salpetersäure, das heißt alle nach dem Stand der Technik gebräuchlichen Oxidationsmittel zur Intercalation von Schwefelsäure und organischen Säuren sowie anorganischen Säuren im Gemisch mit organischen Säuren im Graphit verwenden.

Bei der Herstellung der Schwefelsäure-Graphitpartikel kann bei einer Reaktionstemperatur von -10 bis 100°C, vorzugsweise 10 bis 50°C und einer Reaktionszeit von 3 Minuten bis 48 Stunden gearbeitet werden. Der Waschvorgang mit der erfindungsgemäß eingesetzten Waschflüssigkeit erfolgt normalerweise bei einer Temperatur im Bereich von 0 bis 90°C und vorzugsweise bei einer Temperatur im Bereich von 10 bis 50°C bei einer Verweilzeit der Schwefelsäure-Graphitpartikel in der Waschflüssigkeit von 10 Sekunden bis 1 Stunde, vorzugsweise von 1 Minute bis 15 Minuten.

Gemäß einer bevorzugten Ausführungsform der Erfindung enthält die Waschflüssigkeit als die Expansionseigenschaften der Schwefelsäure-Graphitpartikel beeinflussende Verbindung mindestens einen Vertreter der Sulfate, Hydrogensulfate, Sulfite, Hydrogensulfite, Nitrate, Phosphate, Hydrogenphosphate, Dihydrogenphosphate und Acetate von Natrium, Kalium, Magnesium, Mangan, Eisen, Kupfer, Zink und Aluminium; Wasserstoffperoxid, Iodsäure, Bromsäure, Permangansäure, Perchlorsäure und Peroxodischwefelsäure; Peroxide, Iodate, Bromate, Permanganate, Perchlorate und Peroxodisulfate von Natrium und Kalium; Natriumsalze von Benzolsulfonsäure, Benzol-1,3-disulfonsäure, $C_1$-$C_{30}$-Alkylbenzolsulfonsäuren, Naphthalinsulfonsäure, aromatischen und aliphatischen Aminosulfonsäuren und $C_1$-$C_{30}$-Alkylsulfonsäuren; Natrium-$C_1$-$C_{30}$-alkylsulfate; Natriumsalze von gesättigten oder ungesättigten, aliphatischen $C_2$-$C_{30}$-Carbonsäuren; und gesättigte oder ungesättigte, aliphatische, quartäre Ammoniumsalze der Formel $N(R)_4^+$ $X^-$, in der R unabhängig voneinander $C_1$-$C_{30}$-Alkylgruppen und $X^-$ ein Anion bedeuten, umfassenden Gruppe in gelöster oder dispergierter Form.

Gemäß einer besonders bevorzugten Ausführungsform der Erfindung enthält die bei dem Verfahren eingesetzte Waschflüssigkeit die die Expansionseigenschaften beeinflussende Verbindung in einer Konzentration von $10^{-5}$ bis 10 Mol/l, vorzugsweise $10^{-4}$ bis 1 Mol/l.

Gemäß einer Ausführungsform der Erfindung enthält die Waschflüssigkeit als das Expansionsvolumen [%·mg$^{-1}$] der Schwefelsäure-Graphitpartikel erhöhende Verbindung mindesten einen Vertreter der $Na_2SO_4$, $K_2SO_4$, $MgSO_4$, $CuSO_4$, $ZnSO_4$, $Al_2(SO_4)_3$, $(NH_4)_2S_2O_8$, $NaBrO_3$, $CH_3COONa$, $NaH_2PO_4$, Natriumbenzolsulfonat, Naphthalintrisulfonsäure-Trinatriumsalz, Natrium-1-butansulfonat, Natrium-1-decansulfonat, Natrium-dodecylbenzolsulfonat, Toluolsulfonsäure-Natriumsalz, Tetraethylammoniumbromid, Decyl-trimethylammoniumbromid, Dodecyl-trimethylammoniumbromid, Tetradecyl-trimethylammoniumbromid, Octadecyl-trimethylammoniumchlorid, Natriumacetat, Natriumproprionat, Natriumstearat, Natriumoleat und Natriumbenzoat umfassenden Gruppe in gelöster oder dispergierter Form.

Einer weiteren Ausführungsform der Erfindung zufolge enthält die Waschflüssigkeit als die Expansionsgeschwindigkeit [%·°C$^{-1}$] der Schwefelsäure-Graphitpartikel im Bereich Onset erhöhende Verbindung mindesten einen Vertreter der $Na_2SO_4$, $K_2SO_4$, $MgSO_4$, $MnSO_4$, $CuSO_4$, $ZnSO_4$, $Al_2(SO_4)_3$, $(NH_4)_2S_2O_8$, $KMnO_4$, $NaBrO_3$, $H_2O_2$, $NaNO_3$, $NaH_2PO_4$, Natriumbenzolsulfonat in einer Konzentration von weniger als 0,0125 Mol/l, Natrium-1-butansulfonat, Natrium-1-decansulfonat, Natrium-dodecylbenzolsulfonat, Toluolsulfonsäure-Natriumsalz, Tetraethylammoniumbromid, Dodecyl-trimethylammoniumbromid, Octadecyl-trimethylammoniumchlorid, Natriumacetat, Natriumproprionat, Natriumstearat, Natriumoleat und Natriumbenzoat umfassenden Gruppe in gelöster oder dispergierter Form.

Gemäß einer weiteren Ausführungsform der Erfindung enthält die Waschflüssigkeit als den mittleren Expansionskoeffizienten [K$^{-1}$] der Schwefelsäure-Graphitpartikel erhöhende Verbindung mindesten einen Vertreter der $Na_2SO_4$, $K_2SO_4$, $MgSO_4$, $MnSO_4$, $CuSO_4$, $ZnSO_4$, $Al_2(SO_4)_3$, $(NH_4)_2S_2O_8$, $NaBrO_3$, $NaH_2PO_4$, Natriumbenzolsulfonat, Natrium-1-butansulfonat, Natrium-1-decansulfonat. Toluolsulfonsäure-Natriumsalz, Tetraethylammoniumbromid, Decyl-trimethylammoniumbromid, Dodecyl-trimethylammoniumbromid, Tetradecyl-triethylammoniumbromid, Octadecyl-trimethylammoniumchlorid, Natriumacetat, Natriumproprionat, Natriumstearat, Natriumoleat und Natriumbenzoat umfassenden Gruppe in gelöster oder dispergierter Form.

Gemäß einer weiteren bevorzugten Ausführungsform der Erfindung enthält die Waschflüssigkeit als das Expansionsvolumen [%·mg$^{-1}$] der Schwefelsäure-Graphitpartikel erniedrigende Verbindung mindesten einen Vertreter der $MnSO_4$, $Fe_2SO_4$, $KMnO_4$, $H_2O_2$, $NaNO_3$, Naphthalinsulfonsäure-Natriumsalz, Naphthalin-1,5-disulfonsäure-Dinatriumsalz und Natriumcaprylat umfassenden Gruppe in gelöster oder dispergierter Form.

Einer weiteren bevorzugten Ausführungsform der Erfindung zufolge enthält die Waschflüssigkeit als die Expansionsgeschwindigkeit [%·°C$^{-1}$] der Schwefelsäure-Graphitpartikel im Bereich Onset erniedrigende Verbindung mindesten einen Vertreter der FeSO$_4$, Natriumbenzolsulfonat in einer Konzentration von ≥ 0,0125 Mol/l, Decyl-trimethylammoniumbromid, Tetradecyl-trimethylammoniumbromid, Naphthalinsulfonsäure-Natriumsalz, Naphthalin-1,5-disulfonsäure-Dinatriumsalz. Naphthalintrisulfonsäure-Trinatriumsalz, und Natriumcaprylat umfassenden Gruppe in gelöster oder dispergierter Form.

Einer weiteren bevorzugten Ausführungsform der Erfindung gemäß enthält die Waschflüssigkeit als den mittleren Expansionskoeffizienten [K$^{-1}$] der Schwefelsäure-Graphitpartikel erniedrigende Verbindung mindesten einen Vertreter der FeSO$_4$, KMnO$_4$, H$_2$O$_2$, NaNO$_3$, Naphthalinsulfonsäure-Natriumsalz, Naphthalin-1,5-disulfonsäure-Dinatriumsalz, Naphthalintrisulfonsäure-Trinatriumsalz, Natrium-dodecylbenzolsulfonat und Natriumcaprylat umfassenden Gruppe in gelöster oder dispergierter Form.

Gemäß einer weiteren bevorzugten Ausführungsform der Erfindung handelt es sich bei den mit Schwefelsäure in Gegenwart eines Oxidationsmittels umgesetzten Graphitpartikeln um vermahlenen kristallinen Graphit in Form von Teilchen mit einer Teilchengröße von 0,05 mm bis 1 mm, vorzugsweise 0,075 mm bis 0,7 mm, wobei vorzugsweise die Teilchengrößenverteilung so ist, daß 80% der eingesetzten Graphitpartikel eine Teilchengröße von größer als 0,3 mm aufweisen, weil mit zunehmender Teilchengröße die Expansionseigenschaften des Graphits besser werden.

Mit Vorteil erfolgt die Umsetzung mit Schwefelsäure unter Anwendung eines Gewichtsverhältnises von 100 bis 300 Gewichtsteilen 95 bis 97%-iger, vorzugsweise 96%-iger Schwefelsäure pro 100 Gewichtsteile der Graphitpartikel, wobei als Oxidationsmittel vorzugsweise Wasserstoffperoxid oder Salpetersäure eingesetzt wird. Nach der Umsetzung beträgt der pH-Wert der Graphitpartikel in Abhängigkeit von der angewandten Schwefelsäurekonzentration etwa - 7. Erfindungsgemäß wird mit der die Expansionseigenschaften beeinflussenden Verbindungen enthaltenden wässrigen Waschflüssigkeit bis zu einem pH-Wert im Bereich von 2 bis 8, vorzugsweise 3 bis 7 und noch bevorzugter 3 bis 4 gewaschen. Die Trocknung erfolgt vorzugsweise bei einer Temperatur im Bereich von 50°C bis 120°C bis zu einem Restfeuchtegehalt der Graphitpartikel von vorzugsweise ≤ 1,5%.

Die Messung der Expansionseigenschaften der erfindungsgemäß hergestellten Schwefelsäure-Graphitpartikel erfolgt mit Hilfe der thermomechanischen Analyse (TMA). Mit der thermomechanischen Analyse (TMA) werden Dimensionsänderungen der Schwefelsäure-Graphitpartikel als Funktion der Temperatur und der Zeit gemessen. Hierzu wird die Probe auf einen Probenträger aufgebracht und die Dimensionsänderung der Probe mit Hilfe einer Messsonde in Abhängigkeit von der Aufheiztemperatur und der Aufheizzeit gemessen und aufgezeichnet. Hierzu wird die pulverförmige Probe aus den Schwefelsäure-Graphitpartikeln in einen Korundtiegel eingebracht, der mit einem Stahltiegel abgedeckt wird. Dieser Stahltiegel gewährleistet bei der Ausdehnung der Probe die ruckfreie Übertragung der Dimensionsänderung der Probe auf die Messsonde, welche mit der Oberseite des Stahltiegels in mechanischem Kontakt steht und mit einer einstellbaren Auflast beaufschlagt werden kann.

Bei der Durchführung der Bestimmung des Expansionsverhaltens unter Anwendung dieser Meßeinrichtung wurden die folgenden Bedingungen eingehalten:

| | |
|---|---|
| Temperaturprogramm: | Dynamischer Modus (mit vorgeschalteter isothermer Phase während 5 Minuten bei 25°C) |
| Aufheizrate: | 10°C /min |
| Temperaturbereich: | 25°C bis 500°C |
| Analysengas: | Synthetische Luft |
| Flußrate: | 50 ml /min |
| Auflast: | 0.06 N |
| Probengefäß: | 150 μl Korundtiegel + 150 μl Stahltiegel (als Deckel |

Als Ergebnis der in dieser Weise durchgeführten thermomechanischen Analyse erhält man die in der

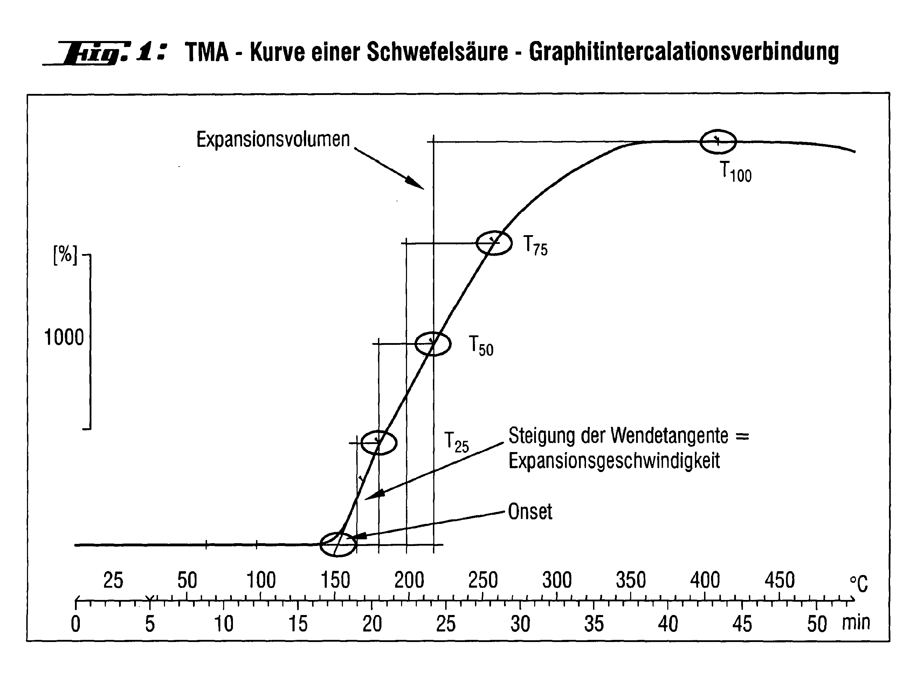

**Figur 1** der beigefügten Zeichnung dargestellte TMA-Kurve einer Graphitintercalationsverbindung.

Wie in dieser Figur 1 dargestellt ist, ist der Onset der Schwefelsäure-Graphitpartikel mathematisch als Schnittpunkt der Basislinie vor der Längenänderung der Probe und der Wendetangente der Expansionskurve definiert.

Die Expansionsgeschwindigkeit des untersuchten intumeszierenden Materials im Bereich des Onset ist gleich der Steigung dieser Wendetangente. Die Einheit der Expansionsgeschwindigkeit ist demzufolge [% · °C$^{-1}$].

Das Expansionsvolumen entspricht der horizontalen Stufe zwischen der Basislinie und dem Maximum der Kurve. Es gibt die Ausdehnung der Substanz [%] beziehungsweise der Ausgangslänge −L$_0$ wieder. Da bei diesen Messungen das Volumen von der eingewogenen Substanzmenge abhängig ist, wird das Expansionsvolumen auf die Einwaage normiert. Als Einheit resultiert die Ausdehnung in [% · mg$^{-1}$]. Die Werte $T_{25}$, $T_{50}$, $T_{75}$ und $T_{100}$ geben die Temperaturen in [°C] wieder, bei denen 25%, 50%, 75% beziehungsweise 100% des maximalen Volumens erreicht worden ist.

Wie aus der Figur 1 ersichtlich ist, gibt die Steigung der Wendetangente lediglich Auskunft über die Anfangsgeschwindigkeit der Expansion. Um das gesamte Expansionsverhalten darstellen zu können, eignet sich die Betrachtung des mittleren Expansionskoeffizienten $\alpha$ in [K$^{-1}$] zwischen dem Onset und dem Maximum der Kurve (=$T_{100}$). Der mittlere Expansionskoeffizient ist definiert als

$$\bar{\alpha} = L_0^{-1} \cdot \Delta L \cdot \Delta T^{-1}$$

worin $\Delta L$ für die durch die Temperaturänderung $\Delta T$ hervorgerufene Längenänderung der Probe steht.

Sämtliche Messungen erfolgten mit Graphitproben vergleichbarer Partikelgrößenverteilung im Bereich von 250 bis 400 $\mu$m. Dies wurde durch Sieben der jeweiligen Graphittypen gewährleistet.

In den nachfolgenden Beispielen sind die Expansionsparameter der hergestellten Schwefelsäure-Graphitpartikel als das normierte Expansionsvolumen, die Expansionsgeschwindigkeit im Bereich des Onset, mittlerer Expansionskoeffizient sowie die Temperaturen $T_{25}$, $T_{50}$, $T_{75}$ und $T_{100}$ angegeben. Teilweise wird bei den Messungen eine mehrstufige Expansion beobachtet. Für diese Fälle sind jeweils die Expansionsgeschwindigkeiten im Bereich Onset-Temperaturen 1 und 2 (Onset 1 beziehungsweise Onset 2), sowie die Expansionsgeschwindigkeit zwischen den Onsets angegeben.

Die folgenden Beispiele dienen der weiteren Erläuterung der Erfindung.

## BEISPIEL 1

In der folgenden Tabelle sind die Expansionparameter zweier typischer kommerzieller Blähgraphittypen aufgeführt.

**Tabelle 1**

| | Schwefelsäuregraphit | Schwefelsäure/Salpetersäuregraphit |
|---|---|---|
| Expansionsvolumen bzgl. Einwaage in [% · mg$^{-1}$] | 245 | 192 |
| $T_{25}$ in [°C] | 237 | 219 |
| $T_{50}$ in [°C] | 255 | 243 |
| $T_{75}$ in [°C] | 278 | 252 |
| $T_{100}$ in [°C] | 361 | 268 |
| Expansionsgeschwindigkeit im Bereich Onset 1 in [% · °C$^{-1}$] | 8,15 | 12,74 |
| Expansionsgeschwindigkeit im Bereich Onset 1 und 2 in [% · °C$^{-1}$] | - | 3.39 |
| Expansionsgeschwindigkeit im Bereich Onset 2 in [% · °C$^{-1}$] | - | 29,47 |
| Mittlerer Expansionskoeffizient zwischen TMA-Onset 1 und $T_{100}$ in [K$^{-1}$] | 0,089 | 0.112 |

## BEISPIEL 2

Zur Verdeutlichung der erfindungsgemäß erreichten Einstellbarkeit des Expansionsverhaltens wurden zum Vergleich Schwefelsäure-Graphitpartikel wie folgt hergestellt, und lediglich mit Wasser als Waschflüssigkeit gewaschen.

Die in diesem Beispiel und den folgenden Beispielen eingesetzten Graphitpartikel besaßen eine Teilchengröße im Bereich von 0,05 mm bis 1 mm, wobei 80% der Partikel eine Teilchengröße von größer als 0,3 mm aufwiesen.

5,0 g (0,42 Mol) Graphitpartikel werden in einem 100 ml Rundkolben vorgelegt, mit 1,0 ml (0,01 Mol) 30%-igem Wasserstoffperoxid und 7,5 ml Schwefelsäure (95% bis 97%) versetzt und bei Raumtemperatur während 19 Stunden gerührt. Anschließend wird mit Wasser bis zu einem pH-Wert von 3 bis 4 gewaschen. Die anschließende Trocknung der Schwefelsäure-Graphitpartikel erfolgt bei 60°C im Trockenschrank.

Andererseits erfolgt das Waschen der erhaltenen rohen Schwefelsäure-Graphitpartikel erfindungsgemäß unter Verwendung einer Waschflüssigkeit, welche in der nachfolgenden Tabelle 2 angegebene Metallsulfate als die Expansionseigenschaften beeinflussende Verbindung in einer Konzentration von jeweils 0,125 M enthält, ebenfalls bis zu einem pH-Wert von 3 bis 4.

Die Eigenschaften der in dieser Weise hergestellten Schwefelsäure-Graphitpartikel sind in der nachfolgenden Tabelle 2 aufgeführt.

## Tabelle 2

| | Vergleich Wasser als Waschflüssig-keit | Wässrige 0,125 M-Lösungen der Sulfate von: | | | |
|---|---|---|---|---|---|
| | | $Na^+$ | $K^+$ | $Mg^{2+}$ | $Mn^{2+}$ |
| Expansionsvolumen bzgl. Einwaage in [% · $mg^{-1}$] | 221 | 338 | 313 | 299 | 103 |
| $T_{25}$ in [°C] | 236 | 232 | 239 | 232 | 449 |
| $T_{50}$ in [°C] | 257 | 254 | 262 | 248 | 459 |
| $T_{75}$ in [°C] | 287 | 285 | 295 | 266 | 468 |
| $T_{100}$ in [°C] | 369 | 379 | 392 | 340 | 500 |
| Expansionsgeschwindigkeit im Bereich Onset 1 in [% · $°C^{-1}$] | 2,33 | 30,21 | 21,68 | 28,24 | 17,62 |
| Expansionsgeschwindigkeit im Bereich Onset 1 und 2 in [% · $°C^{-1}$] | 1,03 | - | - | - | - |
| Expansionsgeschwindigkeit im Bereich Onset 2 in [% · $°C^{-1}$] | 14,88 | - | - | - | - |
| Mittlerer Expansionskoeffizient zwischen TMA-Onset 1 und $T_{100}$ in [$K^{-1}$] | 0,071 | 0,116 | 0,102 | 0,135 | 0,089 |

## Tabelle 2 (Fortsetzung)

| | Vergleich Wasser als Waschflüssig-keit | Wässrige 0,125 M-Lösungen der Sulfate von: | | | |
|---|---|---|---|---|---|
| | | $Fe^{2+}$ | $Cu^{2+}$ | $Zn^{2+}$ | $Al^{3+}$ |
| Expansionsvolumen bzgl. Ein-waage in [% · mg$^{-1}$] | 221 | 81 | 276 | 271 | 232 |
| $T_{25}$ in [°C] | 236 | 383 | 246 | 246 | 241 |
| $T_{50}$ in [°C] | 257 | 416 | 259 | 261 | 257 |
| $T_{75}$ in [°C] | 287 | 442 | 284 | 290 | 280 |
| $T_{100}$ in [°C] | 369 | 493 | 366 | 366 | 360 |
| Expansionsgeschwindigkeit im Bereich Onset 1 in [% · °C$^{-1}$] | 2,33 | 0,39 | 29,65 | 30,82 | 20,30 |
| Expansionsgeschwindigkeit im Bereich Onset 1 und 2 in [% · °C$^{-1}$] | 1,03 | 1,89 | - | - | - |
| Expansionsgeschwindigkeit im Bereich Onset 2 in [% · °C$^{-1}$] | 14,88 | 5,24 | - | - | - |
| Mittlerer Expansionskoeffizi-ent zwischen TMA-Onset 1 und $T_{100}$ in [K$^{-1}$] | 0,071 | 0,013 | 0,116 | 0,112 | 0,096 |

Aus der obigen Tabelle 2 läßt sich entnehmen, daß die Expansionseigenschaften der erhaltenen Schwefelsäure-Graphitpartikel in Abhängigkeit von der Art der in der Waschlösung eingesetzten Metallsulfate gezielt variiert werden können und zwar in Abhängigkeit von den Metallkationen in unterschiedlicher Richtung. So führt die Verwendung von Eisen(II)-sulfat im Vergleich zu dem lediglich mit Wasser gewaschenen Schwefelsäure-Graphit zu einer Erniedrigung der Expansionsgeschwindigkeit und des mittleren Expansionskoeffizienten, während sich diese Eigenschaften mit den anderen Sulfaten erhöhen lassen.

## BEISPIEL 3

Dieses Beispiel verdeutlicht den Einfluß der Natriumsulfat-Konzentration in der Waschflüssigkeit auf die Expansionseigenschaften der Schwefelsäure-Graphitpartikel.

Hierzu werden 5,0 g (0,42 Mol) der in den obigen Beispielen eingesetzten Graphitteilchen in einem 100 ml Rundkolben vorgelegt, mit 1,0 ml (0,01 Mol) 30%-igem Wasserstoffperoxid und 7,5 ml Schwefelsäure (95% bis 97%) versetzt und bei Raumtemperatur während 19 Stunden gerührt. Anschließend wird mit einer wässrigen Natriumsulfatlösung in variierenden Konzentrationen von 0,0125 M bis 0,125 M bis zu einem pH-Wert von 3 bis 4 gewaschen. Die anschließende Trocknung der Graphitpartikel erfolgt bei 60°C im Trokkenschrank.

Die Expansionseigenschaften der erhaltenen Schwefelsäure-Graphitpartikel sind in der nachfolgenden Tabelle 3 zusammengestellt.

### Tabelle 3

| | $Na_2SO_4$ (0,125 M) | $Na_2SO_4$ (0,0625 M) | $Na_2SO_4$ (0,025 M) | $Na_2SO_4$ (0,0125 M) |
|---|---|---|---|---|
| Expansionsvolumen bzgl. Einwaage in [% · mg$^{-1}$] | 338 | 371 | 331 | 336 |
| $T_{25}$ in [°C] | 232 | 226 | 266 | 264 |
| $T_{50}$ in [°C] | 254 | 246 | 283 | 279 |
| $T_{75}$ in [°C] | 285 | 275 | 317 | 312 |
| $T_{100}$ in [°C] | 379 | 369 | 396 | 391 |

(fortgesetzt)

| | Na$_2$SO$_4$ (0,125 M) | Na$_2$SO$_4$ (0,0625 M) | Na$_2$SO$_4$ (0,025 M) | Na$_2$SO$_4$ (0,0125 M) |
|---|---|---|---|---|
| Expansionsgeschwindigkeit im Bereich Onset 1 in [% · °C$^{-1}$] | 30,21 | 30,47 | 36,30 | 39,77 |
| Expansionsgeschwindigkeit im Bereich Onset 1 und 2 in [% · °C$^{-1}$] | - | - | - | - |
| Expansionsgeschwindigkeit im Bereich Onset 2 in[% · °C$^{-1}$] | - | - | - | - |
| Mittlerer Expansionskoeffizient zwischen TMA-Onset 1 und T$_{100}$ in [K$^{-1}$] | 0,116 | 0,125 | 0,133 | 0,134 |
| | | | | |

Aus Tabelle 3 ist ersichtlich, daß durch Variation der Natriumsulfatkonzentration in der Waschflüssigkeit die Expansionseigenschaften, namentlich das Expansionsvolumen, die Expansionsgeschwindigkeit und der mittlere Expansionskoeffizient, gezielt beeinflußt werden können.

Aus der obigen Tabelle 3 läßt sich insbesondere erkennen, daß das Expansionsvolumen nahezu unabhängig von der eingesetzten Natriumsulfat-Konzentration ist, wobei sämtliche Konzentrationen zu einer Steigerung des Expansionsvolumens führen. Andererseits nimmt die Expansionsgeschwindigkeit im Bereich des Onsets mit steigender Natriumsulfat-Konzentration ab. Gleiches gilt für den mittleren Expansionkoeffizienten. Damit ist es in Abhängigkeit von der eingesetzten Natriumsulfat-Konzentration aber ohne weiteres möglich, die Expansionsgeschwindigkeit und den Expansionskoeffizienten unabhängig von dem Expansionsvolumen einzustellen.

**BEISPIEL 4**

Bei diesem Beispiel werden die nach der in Beispiel 2 angegebenen Verfahrensweise erhaltenen Schwefelsäure-Graphitpartikel mit wässrigen Lösungen von Oxidationsmitteln gewaschen, wobei deren Konzentration jeweils 0,05 M beträgt.

Die Eigenschaften der in dieser Weise hergestellten Schwefelsäure-Graphitpartikel sind in der nachfolgenden Tabelle 4 zusammengestellt.

**Tabelle 4**

| | (NH$_4$)$_2$S$_2$O$_8$ | KMnO$_4$ | NaBrO$_3$ | H$_2$O$_2$ |
|---|---|---|---|---|
| Expansionsvolumen bzgl. Einwaage in [% · mg$^{-1}$] | 297 | 209 | 330 | 153 |
| T$_{25}$ in [°C] | 244 | 277 | 261 | 219 |
| T$_{50}$ in [°C] | 265 | 312 | 280 | 308 |
| T$_{75}$ in [°C] | 302 | 357 | 311 | 365 |
| T$_{100}$ in [°C] | 365 | 435 | 385 | 430 |
| Expansionsgeschwindigkeit im Bereich Onset 1 in [% · °C$^{-1}$] | 28,53 | 9,71 | 33,89 | 4,62 |
| Expansionsgeschwindigkeit im Bereich Onset 1 und 2 in [% · °C$^{-1}$] | - | 2,12 | - | - |
| Expansionsgeschwindigkeit im Bereich Onset 2 in [% · °C$^{-1}$] | - | 7,88 | - | - |
| Mittlerer Expansionskoeffizient zwischen TMA-Onset 1 und T$_{100}$ in [K$^{-1}$] | 0,120 | 0,061 | 0,135 | 0,033 |
| | | | | |

Der obigen Tabelle 4 läßt sich entnehmen, daß sich in Abhängigkeit von der Art des eingesetzten Oxidationsmittels das Expansionsverhalten der Graphitpartikel gezielt variieren läßt, indem einerseits eine Steigerung des Expansionsvolumens, der Expansionsgeschwindigkeit und des mittleren Expansionskoeffizienten und andererseits bei Verwendung von Kaliumpermanganat und Wasserstoffperoxid als Oxidationsmittel eine Verringerung dieser Eigenschaften verursacht wird.

**BEISPIEL 5**

Das folgende Beispiel verdeutlicht den Einfluß von verschiedenen Anionen und von Kationenmischungen in der Waschflüssigkeit, wobei die in der nachfolgenden Tabelle aufgeführten Verbindungen jeweils mit einer Konzentration von 0,125 M eingesetzt worden sind. Die Eigenschaften der erhaltenen Schwefelsäure-Graphitpartikel sind in der nachfolgenden Tabelle 5 zusammengestellt.

**Tabelle 5**

| | $NaNO_3$ | NaOAc | $NaH_2PO_4$ | $Na_2SO_4$ $ZnSO_4$ |
|---|---|---|---|---|
| Expansionsvolumen bzgl. Einwaage in [% · $mg^{-1}$] | 175 | 254 | 328 | 313 |
| $T_{25}$ in [°C] | 200 | 247 | 239 | 256 |
| $T_{50}$ in [°C] | 274 | 274 | 256 | 283 |
| $T_{75}$ in [°C] | 320 | 313 | 289 | 322 |
| $T_{100}$ in [°C] | 406 | 379 | 379 | 391 |
| Expansionsgeschwindigkeit im Bereich Onset 1 in [% · $°C^{-1}$] | 28,62 | 17,50 | 30,97 | 34,56 |
| Expansionsgeschwindigkeit im Bereich Onset 1 und 2 in [% · $°C^{-1}$] | 0,26 | - | - | - |
| Expansionsgeschwindigkeit im Bereich Onset 2 in [% · $°C^{-1}$] | 7,03 | - | - | - |
| Mittlerer Expansionskoeffizient zwischen TMA-Onset 1 und $T_{100}$ in [$K^{-1}$] | 0,046 | 0,094 | 0,117 | 0,118 |
| | | | | |

Aus der obigen Tabelle läßt sich entnehmen, daß bei Verbindung von Natriumnitrat als die Expansionseigenschaften beeinflussende Verbindung eine Erniedrigung des Expansionsvolumens und des mittleren Expansionskoeffizienten erreicht werden kann bei gleichzeitiger Steigerung der Expansionsgeschwindigkeit im Vergleich zu dem lediglich mit Wasser gewaschenen Schwefelsäure-Graphit.

**BEISPIEL 6**

Dieses Beispiel verdeutlicht den Einfluß von aromatischen Sulfonaten in der Waschflüssigkeit, wobei die Sulfonate in einer Konzentration von jeweils 0,125 M eingesetzt worden sind.
Die erhaltenen Ergebnisse sind in der nachfolgenden Tabelle 6 zusammengestellt.

**Tabelle 6**

| | Natrium-Benzolsulfonat | Naphthalinsulfonsäurenatriumsalz | Naphthalin-1,5-disulfonsäuredinatriumsalz | Naphthalintrisulfonsäuretrinatriumsalz |
|---|---|---|---|---|
| Expansionsvolumen bzgl. neu Einwaage in [% · mg$^{-1}$] | 332 | 121 | 181 | 282 |
| $T_{25}$ in [°C] | 241 | 258 | 272 | 243 |
| $T_{50}$ in [°C) | 282 | 345 | 339 | 300 |
| $T_{75}$ in [°C] | 335 | 393 | 378 | 349 |
| $T_{100}$ in [°C] | | 462 | 437 | 445 |
| Expansionsgeschwindigkeit im Bereich Onset 1 in [% · °C$^{-1}$] | 1,30 | 0,55 | 1,30 | 2,32 |
| Expansionsgeschwindigkeit im Bereich Onset 1 und 2 in [% · °C$^{-1}$] | 1,30 | - | - | - |
| Expansionsgeschwindigkeit im Bereich Onset 2 in [% · °C$^{-1}$] | 19,03 | - | - | - |
| Mittlerer Expansionskoeffizient zwischen TMA-Onset 1 und $T_{100}$ in [K$^{-1}$] | 0,083 | 0,020 | 0,038 | 0,060 |
| | | | | |

Aus der obigen Tabelle läßt sich ableiten, daß Naphthalinsulfonsäure-natriumsalz, Naphthalin-1,5-disulfonsäure-dinatriumsalz und Naphthalintrisulfonsäure-trinatriumsalz dazu geeignet sind, einen niedrigeren mittleren Expansionskoeffizienten zu erreichen bei variierenden Expansionsvolumina und Expansionsgeschwindigkeiten.

**BEISPIEL 7**

Dieses Beispiel verdeutlicht den Einfluß der Natriumbenzolsulfonat-Konzentration in der Waschflüssigkeit auf die Expansionseigenschaften der erhaltenen Schwefelsäure-Graphitpartikel.

Hierzu werden 5,0 g (0,42 Mol) Graphitpartikel der gleichen Teilchengröße wie in den vorhergehenden Beispielen in einem 100 ml Rundkolben vorgelegt, mit 1,0 ml (0,01 Mol) 30%-igem Wasserstoffperoxid und 7,5 ml Schwefelsäure (95% bis 97%) versetzt und bei Raumtemperatur während 19 Stunden gerührt. Anschließend wird mit einer wässrigen Lösung von Natriumbenzolsulfonat in variierenden Konzentrationen von 0,001 M bis 0,125 M bis zu einem pH-Wert von 3 bis 4 gewaschen. Die anschließende Trocknung der Schwefelsäure-Graphitpartikel erfolgt bei 60°C im Trockenschrank.

Die Eigenschaften der erhaltenen Graphitpartikel sind in der nachfolgenden Tabelle 7 aufgeführt.

**Tabelle 7**

| | Natriumbenzolsulfonat (0,125 M) | Natriumbenzolsulfonat (0,0625 M) | Natriumbenzolsulfonat (0,025 M) | Natriumbenzolsulfonat (0,0125 M) | Natriumbenzolsulfonat (0,001 M) |
|---|---|---|---|---|---|
| Expansionsvolumen bzgl. Einwaage in [% · mg$^{-1}$] | 332 | 400 | 374 | 372 | 305 |
| $T_{25}$ in [°C] | 241 | 252 | 253 | 239 | 248 |
| $T_{50}$ in [°C] | 282 | 288 | 289 | 266 | 262 |
| $T_{75}$ in [°C] | 335 | 338 | 330 | 308 | 295 |
| $T_{100}$ in [°C] | 424 | 421 | 406 | 389 | 368 |
| Expansionsgeschwindigkeit im Bereich Onset 1 in [% · °C$^{-1}$] | 1,30 | 18,71 | 20,94 | 26,30 | 34,09 |
| Expansionsgeschwindigkeit im Bereich Onset 1 und 2 in [% · °C$^{-1}$] | 1,30 | - | - | - | - |
| Expansionsgeschwindigkeit im Bereich Onset 2 in [% · °C$^{-1}$] | 19,03 | - | - | - | - |
| Mittlerer Expansionskoeffizient zwischen TMA-Onset 1 und $T_{100}$ in [K$^{-1}$] | 0,083 | 0,114 | 0,117 | 0,123 | 0,128 |
| | | | | | |

Der Tabelle 7 läßt sich entnehmen, daß sich mit Natriumbenzolsulfonat in einer Konzentration von 0,001 M bis 0,0625 M eine deutliche Steigerung des Expansionsvolumens, der Expansionsgeschwindigkeit und des mittleren Expansionskoeffizienten im Vergleich zu den lediglich mit Wasser gewaschenen Graphitpartikeln erreichen läßt. Bei Anwendung von Natriumbenzolsulfonat in einer Konzentration von 0,125 M ergeben sich die gleichen Eigenschaften, jedoch eine etwas niedrigere Expansionsgeschwindigkeit im Bereich des Onset.

Die obigen Angaben der Tabelle 7 zeigen, daß mit einer Konzentration von 0,0625 M das höchste Expansionsvolumen erzielt wird. Die Expansionsgeschwindigkeit und der mittlere Expansionskoeffizient nehmen ebenfalls mit steigender Natriumbenzolsulfonat-Konzentration ab. Weiterhin ist zu erkennen, daß das erzielbare Expansionsvolumen, die Expansionsgeschwindigkeit im Onset-Bereich und der mittlere Expansionskoeffizient sich mit zunehmender Kettenlänge verringern.

**BEISPIEL 8**

Dieses Beispiel verdeutlicht den Einfluß von aliphatischen und aromatischen Sulfonaten in einer Konzentration von 0,0625 M in der Waschflüssigkeit.

Zur Herstellung der Schwefelsäure-Graphitpartikel werden 5,0 g (0,42 Mol) Graphitpartikel der gleichen Teilchengröße wie in den vorhergehenden Beispielen in einen 100 ml Rundkolben vorgelegt, mit 1,0 ml (0,01 Mol) 30%-igem Wasserstoffperoxid und 7,5 ml Schwefelsäure (95% bis 97%) versetzt und bei Raumtemperatur während 19 Stunden gerührt. Anschließend wird mit einer wässrigen Lösung der in der nachfolgenden Tabelle angegebenen Sulfonate in einer Konzentration von 0,0625 M bis zu einem pH-Wert von 3 bis 4 gewaschen. Die anschließende Trocknung der Graphit-Intercalationsverbindungen erfolgt bei 60°C im Trockenschrank.

Die Eigenschaften der erhaltenen Schwefelsäure-Graphitpartikel sind in der nachfolgenden Tabelle 8 zusammengestellt.

**Tabelle 8**

| | Natrium-1-butansulfonat | Natrium-1-decansulfonat | Natriumdodecylbenzolsulfonat | Toluolsulfonsäurenatriumsalz |
|---|---|---|---|---|
| Expansionsvolumen bzgl. Einwaage in [% · mg$^{-1}$] | 434 | 502 | 269 | 378 |
| $T_{25}$ in [°C] | 238 | 239 | 232 | 248 |
| $T_{50}$ in [°C] | 265 | 271 | 274 | 294 |
| $T_{75}$ in [°C] | 306 | 312 | 328 | 333 |
| $T_{100}$ in [°C] | 387 | 401 | 415 | 412 |
| Expansionsgeschwindig-keit im Bereich Onset 1 in [% · °C$^{-1}$] | 36,47 | 26,29 | 4,56 | 15,00 |
| Expansionsgeschwindigkeit im Bereich Onset 1 und 2 in [% · °C$^{-1}$] | | | 2,12 | |
| Expansionsgeschwindigkeit im Bereich Onset 2 in [% · °C$^{-1}$] | | | 10,21 | |
| Mittlerer Expansionskoeffizient zwischen TMA-Onset 1 und $T_{100}$ in [K$^{-1}$] | 0,146 | 0,149 | 0,058 | 0,107 |
| | | | | |

Es läßt sich der obigen Tabelle entnehmen, daß sich mit den angegebenen Sulfonaten durchwegs eine Erhöhung des Expansionsvolumens, der Expansionsgeschwindigkeit und mit Ausnahme von Natrium-Dodecylbenzolsulfonat auch des mittleren Expansionskoeffizienten gegenüber dem lediglich mit Wasser gewaschenen Schwefelsäure-Graphit erreichen läßt.

**BEISPIEL 9**

Dieses Beispiel verdeutlicht die Wirkung von kationischen Tensiden mit Ammonium-Kopf, die in einer Konzentration von $1{,}0 \cdot 10^{-3}$ M in der Waschflüssigkeit eingesetzt werden.

Die folgende Tabelle 9 zeigt die Expansionseigenschaften der Schwefelsäure-Graphitpartikel, die unter Einsatz dieser Waschflüssigkeiten und der Anwendung der Verfahrensweisen der vorhergehenden Beispiele erhalten worden sind.

**Tabelle 9**

| | Tetra-EA-Br | Decyl-TMA-Br | Dodecyl-TMA-Br | Tetradecyl-TMA-Br | Octadecyl-TMA-Cl |
|---|---|---|---|---|---|
| Expansionsvolumen bzgl. Einwaage in [% · mg$^{-1}$] | 321 | 312 | 321 | 304 | 300 |
| $T_{25}$ in [°C] | 257 | 233 | 241 | 238 | 244 |
| $T_{50}$ in [°C] | 288 | 253 | 266 | 270 | 275 |
| T75 in [°C] | 325 | 288 | 302 | 308 | 318 |
| $T_{100}$ in [°C] | 382 | 368 | 373 | 384 | 380 |
| Expansionsgeschwindigkeit im Bereich Onset 1 in [% · °C$^{-1}$] | 19,15 | 1,18 | 26,74 | 1,53 | 26,42 |
| Expansionsgeschwindigkeit im Bereich Onset 1 und 2 in [% · °C$^{-1}$] | - | 1,18 | - | 1,53 | - |
| Expansionsgeschwindigkeit im Bereich Onset 2 in [% · °C$^{-1}$] | - | 27,44 | - | 17,91 | - |
| Mittlerer Expansionskoeffizient zwischen TMA-Onset 1 und $T_{100}$ in [K$^{-1}$] | 0,120 | 0,105 | 0,119 | 0,077 | 0,111 |
| | | | | | |
| EA = ethylammonium, TMA = trimethylammonium | | | | | |

Der obigen Tabelle 9 läßt sich entnehmen, daß sich gegenüber den lediglich mit Wasser gewaschenen Schwefelsäure-Graphitpartikeln erfindungsgemäß eine deutliche Steigerung des Expansionsvolumens und des mittleren Expansionskoeffizienten erreichen läßt, während die Expansionsgeschwindigkeit in Abhängigkeit von den eingesetzten kationischen Tensiden variiert werden kann.

**BEISPIEL 10**

Dieses Beispiel verdeutlicht den Einfluß der Verwendung von anionischen Tensiden mit Carbonsäure-Kopf als Verbindungen zur Beeinflussung des Expansionsverhaltens. Diese anionischen Tenside werden in einer Konzentration von 0,125 M eingesetzt.

**Tabelle 10**

| | Natriumacetat 0,125 M | Natriumpropionat 0,125 M | Natriumcaprylat 0,125 M | Natriumstearat $1.6 \cdot 10^{-3}$ M | Natriumoleat $8.0 \cdot 10^{-4}$ M | Natriumbenzoat 0,0625 M |
|---|---|---|---|---|---|---|
| Expansionsvolumen bzgl. Einwaage in [% · mg$^{-1}$] | 254 | 308 | 179 | 375 | 326 | 383 |
| $T_{25}$ in [°C] | 247 | 245 | 354 | 230 | 236 | 249 |
| $T_{50}$ in [°C] | 274 | 278 | 384 | 257 | 261 | 291 |
| $T_{75}$ in [°C] | 313 | 323 | 407 | 297 | 294 | 338 |
| $T_{100}$ in [°C] | 379 | 402 | 459 | 379 | 370 | 443 |
| Expansionsgeschwindigkeit im Bereich Onset 1 in [% · °C$^{-1}$] | 17,50 | 17,94 | 1,71 | 6,71 | 26,97 | 15,35 |
| Expansionsgeschwindigkeit im Bereich Onset 1 und 2 in [% · °C$^{-1}$] | - | - | - | 6,71 | - | - |
| Expansionsgeschwindigkeit im Bereich Onset 2 in [% · °C$^{-1}$] | - | - | - | 21,74 | - | - |
| Mittlerer Expansionskoeffizient zwischen TMA-Onset 1 und $T_{100}$ in [K$^{-1}$] | 0,094 | 0,095 | 0,049 | 0,113 | 0,120 | 0,093 |
| | | | | | | |

Auch diese Tabelle verdeutlicht, daß das Expansionsverhalten der Schwefelsäure-Graphitpartikel gezielt durch den Einsatz der vewendeten anionischen Tenside in der Waschflüssigkeit gesteuert werden kann.

Die obigen Beispiele lassen erkennen, daß es mit Hilfe des erfindungsgemäßen Verfahrens ohne weiteres möglich ist, durch Variation der in der verwendeten Waschflüssigkeit eingesetzten, die Expansionseigenschaften beeinflussenden Verbindungen beziehungsweise deren Konzentration die Expansionseigenschaften der erhaltenen Schwefelsäure-Graphitpartikel in gewünschter Weise zu variieren und damit in Hinblick auf den Einsatz als intumeszierendes Brandschutzadditiv für die Herstellung von Flammschutz-Zusammensetzungen zu optimieren.

**Patentansprüche**

1.   Verfahren zur Steuerung der Expansionseigenschaften von thermisch expandierbaren Schwefelsäure-Graphitpartikeln, **dadurch gekennzeichnet, daß** man die durch Umsetzung von Graphitpartikeln mit Schwefelsäure in Gegenwart eines Oxidationsmittels hergestellten Schwefelsäure-Graphitpartikel mit einer die Expansionseigenschaften beeinflussende Verbindungen enthaltenden wässrigen Waschflüssigkeit bis zu einem pH-Wert im Bereich von 2 bis 8, vorzugsweise 3 bis 7, gemessen in der von den gewaschenen Schwefelsäure-Graphitpartikeln abgetrennten Waschflüssigkeit, wäscht und dann trocknet.

2.   Verfahren nach Anspruch 1, **dadurch gekennzeichnet, daß** die Waschflüssigkeit als die Expansionseigenschaften der Schwefelsäure-Graphitpartikel beeinflussende Verbindung mindestens einen Vertreter der Sulfate, Hydrogensulfate, Sulfite, Hydrogensulfite, Nitrate, Phosphate, Hydrogenphosphate, Dihydrogenphosphate und Acetate von Natrium, Kalium, Magnesium, Mangan, Eisen, Kupfer, Zink und Aluminium; Wasserstoffperoxid, Iodsäure, Bromsäure, Permangansäure, Perchlorsäure und Peroxodischwefelsäure; Peroxide, Iodate, Bromate, Permanganate, Perchlorate und Peroxodisulfate von Natrium und Kalium; Natriumsalze von Benzolsulfonsäure, Benzol-1,3-disulfonsäure, $C_1$-$C_{30}$-Alkylbenzolsulfonsäuren, Naphthalinsulfonsäure, aromatischen und aliphatischen Aminosulfonsäuren und $C_1$-$C_{30}$-Alkylsulfonsäuren; Natrium-$C_1$-$C_{30}$-alkylsulfate; Natriumsalze von gesättigten oder ungesättigten, aliphatischen $C_2$-$C_{30}$-Carbonsäuren; und gesättigte oder ungesättigte, aliphatische, quartäre Ammoniumsalze der Formel $N(R)_4^+$ $X^-$, in der R unabhängig voneinander $C_1$-$C_{30}$-Alkylgruppen und $X^-$ ein Anion bedeuten, umfassenden Gruppe in gelöster oder dispergierter Form enthält.

3.   Verfahren nach Anspruch 1 oder 2, **dadurch gekennzeichnet, daß** die Waschflüssigkeit die die Expansionseigenschaften beeinflussende Verbindung in einer Konzentration von $10^{-5}$ bis 10 Mol/l, vorzugsweise $10^{-4}$ bis 1 Mol/l enthält

4.   Verfahren nach den Ansprüchen 1 bis 3, **dadurch gekennzeichnet, daß** die Waschflüssigkeit als das Expansionsvolumen [%•$mg^{-1}$] der Schwefelsäure-Graphitpartikel erhöhende Verbindung mindesten einen Vertreter der $Na_2SO_4$, $K_2SO_4$, $MgSO_4$, $CuSO_4$, $ZnSO_4$, $Al_2(SO_4)_3$, $(NH_4)_2S_2O_8$, $NaBrO_3$, $CH_3COONa$, $NaH_2PO_4$, Natriumbenzolsulfonat, Naphthalintrisulfonsäure-Trinatriumsalz, Natrium-1-butansulfonat, Natrium-1-decansulfonat, Natrium-dodecylbenzolsulfonat, Toluolsulfonsäure-Natriumsalz, Tetraethylammoniumbromid, Decyl-trimethylammoniumbromid, Dodecyl-trimethylammoniumbromid, Tetradecyl-trimethylammoniumbromid, Octadecyl-trimethylammoniumchlorid, Natriumacetat, Natriumproprionat, Natriumstearat, Natriumoleat und Natriumbenzoat umfassenden Gruppe in gelöster oder dispergierter Form enthält.

5.   Verfahren nach den Ansprüchen 1 bis 3, **dadurch gekennzeichnet, daß** die Waschflüssigkeit als die Expansionsgeschwindigkeit [%•$C^{-1}$] der Schwefelsäure-Graphitpartikel im Bereich Onset erhöhende Verbindung mindesten einen Vertreter der $Na_2SO_4$, $K_2SO_4$, $MgSO_4$, $MnSO_4$, $CuSO_4$, $ZnSO_4$, $Al_2(SO_4)_3$, $(NH_4)_2S_2O_8$, $KMnO_4$, $NaBrO_3$, $H_2O_2$, $NaNO_3$, $NaH_2PO_4$, Natriumbenzolsulfonat in einer Konzentration von weniger als 0,0125 Mol/l, Natrium-1-butansulfonat, Natrium-1-decansulfonat, Natrium-dodecylbenzolsulfonat, Toluolsulfonsäure-Natriumsalz, Tetraethylammoniumbromid, Dodecyl-trimethylammoniumbromid, Octadecyl-trimethylammoniumchlorid, Natriumacetat, Natriumproprionat, Natriumstearat, Natriumoleat und Natriumbenzoat umfassenden Gruppe in gelöster oder dispergierter Form enthält.

6.   Verfahren nach den Ansprüchen 1 bis 3, **dadurch gekennzeichnet, daß** die Waschflüssigkeit als den mittleren Expansionskoeffizienten [$K^{-1}$] der Schwefelsäure-Graphitpartikel erhöhende Verbindung mindesten einen Vertreter der $Na_2SO_4$, $K_2SO_4$, $MgSO_4$, $MnSO_4$, $CuSO_4$, $ZnSO_4$, $Al_2(SO_4)_3$, $(NH_4)_2S_2O_8$, $NaBrO_3$, $NaH_2PO_4$, Natriumbenzolsulfonat, Natrium-1-butansulfonat, Natrium-1-decansulfonat, Toluolsulfonsäure-Natriumsalz, Tetraethylammoniumbromid, Decyl-trimethylammoniumbromid, Dodecyl-trimethylammoniumbromid, Tetradecyl-triethylammoniumbromid, Octadecyl-trimethylammoniumchlorid, Natriumacetat, Natriumproprionat, Natriumstearat, Natriumoleat und Natriumbenzoat umfassenden Gruppe in gelöster oder dispergierter Form enthält.

7. Verfahren nach den Ansprüchen 1 bis 3, **dadurch gekennzeichnet, daß** die Waschflüssigkeit als das Expansions-volumen [%•mg$^{-1}$] der Schwefelsäure-Graphitpartikel erniedrigende Verbindung mindesten einen Vertreter der MnSO$_4$, Fe$_2$SO$_4$, KMnO$_4$, H$_2$O$_2$, NaNO$_3$, Naphthalinsulfonsäure-Natriumsalz, Naphthalin-1,5-disulfonsäure-Dinatriumsalz und Natriumcaprylat umfassenden Gruppe in gelöster oder dispergierter Form enthält.

8. Verfahren nach den Ansprüchen 1 bis 3, **dadurch gekennzeichnet, daß** die Waschflüssigkeit als die Expansions-geschwindigkeit [%•°C$^{-1}$] der Schwefelsäure-Graphitpartikel im Bereich Onset erniedrigende Verbindung mindesten einen Vertreter der FeSO$_4$, Natriumbenzolsulfonat in einer Konzentration von ≥ 0,0125 Mol/l, Decyl-trimethylammoniumbromid, Tetradecyl-trimethylammoniumbromid, Naphthalinsulfonsäure-Natriumsalz, Naphthalin-1,5-disulfonsäure-Dinatriumsalz, Naphthalintrisulfonsäure-Trinatriumsalz, und Natriumcaprylat umfassenden Gruppe in gelöster oder dispergierter Form enthält.

9. Verfahren nach den Ansprüchen 1 bis 3, **dadurch gekennzeichnet, daß** die Waschflüssigkeit als den mittleren Expansionskoeffizienten [K$^{-1}$] der Schwefelsäure-Graphitpartikel erniedrigende Verbindung mindesten einen Ver-treter der FeSO$_4$, KMnO$_4$, H$_2$O$_2$, NaNO$_3$, Naphthalinsulfonsäure-Natriumsalz, Naphthalin-1,5-disulfonsäure-Dinatriumsalz, Naphthalintrisulfonsäure-Trinatriumsalz, Natrium-dodecylbenzolsulfonat und Natriumcaprylat umfassenden Gruppe in gelöster oder dispergierter Form enthält.

10. Verwendung der nach den Verfahren gemäß den Ansprüchen 1 bis 9 erhältlichen, thermisch expandierbaren Schwefelsäure-Graphitpartikel als intumeszierendes Brandschutzadditiv für die Herstellung von Flammschutz-Zusammensetzungen insbesondere für Brandschutz-Abdichtungen von Durchbrüchen, Durchführungen und sonstigen Öffnungen in Wänden, Böden und/oder Decken von Gebäuden.

**Claims**

1. Control process of expansion properties of thermally expansible graphite-sulphuric acid particles, **characterised in that** the graphite-sulphuric acid particles, which are produced by converting graphite particles with sulphuric acid in the presence of a means of oxidation, are washed with an aqueous washing liquid containing compounds for influencing the expansion properties up to a pH value in the range of 2 to 8, preferably 3 to 7, measured in the washing liquid, which has been separated from the graphite-sulphuric acid particles, which have been washed, and then dried.

2. Method according to claim 1, **characterised in that** the washing liquid contains at least one representative of the group comprising sulphates, hydrogen sulphates, sulphites, hydrogen sulphites, nitrates, phosphates, hydrogen phosphates, dihydrogen phosphates and acetates of sodium, potassium, magnesium, manganese, iron, copper, zinc and aluminium: hydrogen peroxide, iodic acid, bromic acid, permanganic acid, perchloric acid and peroxide sulphuric acid: peroxides, iodates, bromates, permanganates, perchlorates and peroxide sulphates of sodium and potassium: sodium salts of benzene sulphonic acid, benzene-1.3-sulphonic acid, C$_1$-C$_{30}$ alkyl benzene sulphonic acids, naphthalene sulphonic acid, aromatic and aliphatic amino sulphonic acids and C$_1$-C$_{30}$ alkyl sulphonic acids: sodium C$_1$-C$_{30}$ aklyl sulphates: sodium salts of saturated or unsaturated aliphatic C$_1$-C$_{30}$ carbonic acids: and sat-urated or unsaturated aliphatic quaternary ammonium salts of the formula N(R)$_4$$^+$ X$^-$, in which R means C$_1$-C$_{30}$ alkyl groups independent of each other and X$^-$ means an anion, in a dissolved or dispersed form as the compound for influencing the expansion properties of the graphite-sulphuric acid particles.

3. Method according to claim 1 or 2, **characterised in that** the washing liquid contains the compound for influencing the expansion properties in a concentration of 10$^{-5}$ to 10 Mol/l preferably 10$^{-4}$ to 1 Mol/l.

4. Method according to claims 1 to 3, **characterised in that** the washing liquid contains at least one representative of the group comprising Na$_2$SO$_4$, K$_2$SO$_4$, MgSO$_4$, CuSO$_4$, ZnSO$_4$, Al$_2$(SO$_4$)$_3$, (NH$_4$)$_2$S$_2$O$_8$, NaBrO$_3$, CH$_3$COONa, NaH$_2$PO$_4$, sodium benzene sulphonate, naphthalene trisulphonic acid trisodium salt, sodium-1-butane sulphonate, sodium-1-decane sulphonate, sodium dodecyl benzene sulphonate, toluene sulphonic acid sodium salt, tetraethyl ammonium bromide, decyl trimethyl ammonium bromide, dodecyl trimethyl ammonium bromide, tetradecyl trimethyl ammonium bromide, octadecyl trimethyl ammonium chloride, sodium acetate, sodium propionate, sodium stearate, sodium oleate and sodium benzoate in a dissolved or dispersed form as the compound for increasing the expansion volume (% • mg$^{-1}$) of the graphite-sulphuric acid particles.

5. Method according to claims 1 to 3, **characterised in that** the washing liquid contains at least one representative of the group comprising Na$_2$SO$_4$, K$_2$SO$_4$, MgSO$_4$, MnSO$_4$, CuSO$_4$, ZnSO$_4$, Al$_2$(SO$_4$)$_3$, (NH$_4$)$_2$S$_2$O$_8$, KMnO$_4$, NaBrO$_3$, H$_2$O$_2$, NaNO$_3$, NaH$_2$PO$_4$, sodium benzene sulphonate in a concentration of less than 0.0125 Mol/l, sodium-1-butane sulphonate, sodium-1-decane sulphonate, sodium dodecyl benzene sulphonate, toluene sulphonic acid sodium salt, tetraethyl ammonium bromide, dodecyl trimethyl ammonium bromide, octadecyl trimethyl ammonium chloride, sodium acetate, sodium propionate, sodium stearate, sodium oleate and sodium benzoate in a dissolved or dispersed form as the compound for increasing the expansion speed (% $\cdot$ °C$^{-1}$) of the graphite-sulphuric acid particles in the onset area.

6. Method according to claims 1 to 3, **characterised in that** the washing liquid contains at least one representative of the group comprising Na$_2$SO$_4$, K$_2$SO$_4$, MgSO$_4$, MnSO$_4$, CuSO$_4$, ZnSO$_4$, Al$_2$(SO$_4$)$_3$, (NH$_4$)2S$_2$O$_8$, NaBrO$_3$, NaH$_2$PO$_4$, sodium benzene sulphonate, sodium-1-butane sulphonate, sodium-1-decane sulphonate, toluene sulphonic acid sodium salt, tetraethyl ammonium bromide, decyl trimethyl ammonium bromide, dodecyl trimethyl ammonium bromide, tetradecyl triethyl ammonium bromide, octadecyl trimethyl ammonium chloride, sodium acetate, sodium propionate, sodium stearate, sodium oleate and sodium benzoate in a dissolved or dispersed form as the compound for increasing the average expansion coefficients (K$^{-1}$) of the graphite-sulphuric acid particles.

7. Method according to claims 1 to 3, **characterised in that** the washing liquid contains at least one representative of the group comprising MnSO$_4$, Fe$_2$SO$_4$, KMnO$_4$, H$_2$O$_2$, NaNO$_3$, naphthalene sulphonic acid sodium salt, naphthalene-1.5-disulphonic acid disodium salt and sodium caprylate in a dissolved or dispersed form as the compound for reducing the expansion volume (% $\cdot$ mg$^{-1}$) of the graphite-sulphuric acid particles.

8. Method according to claims 1 to 3, **characterised in that** the washing liquid contains at least one representative of the group comprising FeSO$_4$, sodium benzene sulphonate in a concentration of $\geq$ 0.0125 Mol/l, decyl trimethyl ammonium bromide, tetradecyl trimethyl ammonium bromide, naphthalene sulphonic acid sodium salt, naphthalene-1.5-disulphonic acid disodium salt, naphthalene trisulphonic acid trisodium salt and sodium caprylate in a dissolved or dispersed form as the compound for reducing the expansion speed (% $\cdot$ °C$^{-1}$) of the graphite-sulphuric acid particles in the onset area.

9. Method according to claims 1 to 3, **characterised in that** the washing liquid contains at least one representative of the group comprising FeSO$_4$, KMnO$_4$, H$_2$O$_2$, NaNO$_3$, naphthalene sulphonic acid sodium salt, naphthalene-1.5-disulphonic acid disodium salt, naphthalene trisulphonic acid trisodium salt, sodium dodecyl benzene sulphonate and sodium caprylate in a dissolved or dispersed form as the compound for reducing the average expansion coefficients (K$^{-1}$) of the graphite-sulphuric acid particles.

10. Use of the thermally expansible graphite-sulphuric acid particles, which may be obtained according to the method according to claims 1 to 9, as an intumescent fire retardant additive for producing flame retardant compositions, particularly for fire seals for perforations, inlets and other openings in the walls, floors and/or ceilings of buildings.

**Revendications**

1. Procédé de commande des propriétés d'expansion de particules thermiquement expansibles de graphite-acide sulfurique, **caractérisé en ce que** l'on lave les particules de graphite-acide sulfurique, préparées par réaction de particules de graphite avec de l'acide sulfurique en présence d'un agent oxydant, avec un liquide de lavage aqueux contenant des composés influençant les propriétés d'expansion jusqu'à un pH dans l'intervalle de 2 à 8, de préférence de 3 à 7, mesuré dans le liquide de lavage séparé des particules de graphite-acide sulfurique, puis que l'on sèche.

2. Procédé selon la revendication 1, **caractérisé en ce que** le liquide de lavage contient, en tant que composé influençant les propriétés d'expansion, des particules de graphite-acide sulfurique, au moins un représentant du groupe comprenant des sulfates, des hydrogénosulfates, des sulfites, des hydrogénosulfites, des nitrates, des phosphates, des hydrogénophosphates, des dihydrogénophosphates et des acétates de sodium, de potassium, de magnésium, de manganèse, de fer, de cuivre, de zinc et d'aluminium ; le peroxyde d'hydrogène, l'acide iodique, l'acide bromique, l'acide permanganique, l'acide perchlorique et l'acide peroxodisulfurique ; des peroxydes, des iodates, des bromates, des permanganates, des perchlorates et des peroxodisulfates de sodium et de potassium ; des sels de sodium de l'acide benzène sulfonique, de l'acide benzène 1,3-disulfonique, d'acides (alkyle en C$_1$ à C$_{30}$)-benzène sulfonique ; du sulfate de sodium et d'alkyle en C$_1$ à C$_{30}$ ; des sels de sodium d'acides carboxyliques aliphatiques saturés ou insaturés en C$_2$ à C$_{30}$ ; et des sels d'ammonium quaternaire aliphatiques saturés ou insaturés de la formule N(R)$_4$$^+$ X$^-$, dans laquelle les R sont, indépendamment les uns des autres, des groupes alkyles en C$_1$

à $C_{30}$ et $X^-$ signifie un anion, sous une forme dissoute ou dispersée.

3. Procédé selon la revendication 1 ou 2,
   **caractérisé en ce que** le liquide de lavage contient le composé influençant les propriétés d'expansion en une concentration de $10^{-5}$ à $10$ mol/l, de préférence $10^{-4}$ à $1$ mol/l.

4. Procédé selon les revendications 1 à 3,
   **caractérisé en ce que** le liquide de lavage contient en tant que composé augmentant le volume d'expansion [%·$mg^{-1}$] des particules de graphite-acide sulfurique au moins un représentant du groupe comprenant $Na_2SO_4$, $K_2SO_4$, $MgSO_4$, $CuSO_4$, $ZnSO_4$, $Al_2(SO_4)_3$, $(NH_4)_2S_2O_8$, $NaBrO_3$, $CH_3COONa$, $NaH_2PO$, le benzène sulfonate de sodium, le sel trisodique de l'acide naphtalène trisulfonique, le 1-butanesulfonate de sodium, le 1-décanesulfonate de sodium, le dodécylbenzolsulfonate de sodium, le sel de sodium de l'acide toluène sulfonique, le bromure de tétraéthylammonium, le bromure de décyltriméthylammonium, le bromure de dodécyltriméthylammonium, le bromure de tétradécyltriméthylammonium, le chlorure d'octadécyltriméthylammonium, l'acétate de sodium, le propionate de sodium, le stéarate de sodium, l'oléate de sodium et le benzoate de sodium, sous forme dissoute ou dispersée.

5. Procédé selon les revendications 1 à 3,
   **caractérisé en ce que** le liquide de lavage contient, en tant que composé augmentant dans la plage Onset la vitesse d'expansion [%·$°C^{-1}$] des particules de graphite-acide sulfurique, au moins un représentant du groupe comprenant $Na_2SO_4$, $K_2SO_4$, $MgSO_4$, $MnSO_4$, $CuSO_4$, $ZnSO_4$, $Al_2(SO_4)_3$, $(NH_4)_2S_2O_8$, $KMnO_4$, $NaBrO_3$, $H_2O_2$, $NaNO_3$, $NaH_2PO_4$, le benzène sulfonate de sodium en une concentration de moins de $0,0125$ mol/l, le 1-butanesulfonate de sodium, le 1-décanesulfonate de sodium, le dodécylbenzène sulfonate de sodium, le sel de sodium de l'acide toluène sulfonique, le bromure de tétraéthylammonium, le bromure de dodécyltriméthylammonium, le chlorure d'octadécyltriméthylammonium, l'acétate de sodium, le propionate de sodium, le stéarate de sodium, l'oléate de sodium et le benzoate de sodium, sous forme dissoute ou dispersée.

6. Procédé selon les revendications 1 à 3,
   **caractérisé en ce que** le liquide de lavage contient, en tant que composé augmentant le coefficient d'expansion moyen [$K^{-1}$] des particules de graphite-acide sulfurique, au moins un représentant du groupe comprenant $Na_2SO_4$, $K_2SO_4$, $MgSO_4$, $MnSO_4$, $CuSO_4$, $ZnSO_4$, $Al_2(SO_4)_3$, $(NH_4)_2S_2O_8$, $NaBrO_3$, $NaH_2PO_4$, le benzène sulfonate de sodium, le 1-butanesulfonate de sodium, le 1-décanesulfonate de sodium, le sel de sodium de l'acide toluène sulfonique, le bromure de tétraéthylammonium, le bromure de décyltriméthylammonium, le bromure de dodécyltriméthylammonium, le bromure de tétradécyltriéthylammonium, le chlorure d'octadécyltriméthylammonium, l'acétate de sodium, le propionate de sodium, le stéarate de sodium, l'oléate de sodium et le benzoate de sodium, sous forme dissoute ou dispersée.

7. Procédé selon les revendications 1 à 3,
   **caractérisé en ce que** le liquide de lavage contient, en tant que composé réduisant le volume d'expansion [%·$mg^{-1}$] des particules de graphite-acide sulfurique, au moins un représentant du groupe comprenant $MnSO_4$, $Fe_2SO_4$, $KMnO_4$, $H_2O_2$, $NaNO_3$, le sel de sodium de l'acide naphtalène sulfonique, le sel de disodium de l'acide naphtalène 1,5-disulfonique et le caprylate de sodium, sous forme dissoute ou dispersée.

8. Procédé selon les revendications 1 à 3,
   **caractérisé en ce que** le liquide de lavage contient, en tant que composé réduisant dans la plage Onset la vitesse d'expansion [%·$°C^{-1}$] des particules de graphite-acide sulfurique, au moins un représentant du groupe comprenant $FeSO_4$, le benzène sulfonate de sodium en une concentration de $\geq 0,0125$ mol/l, le bromure de décyltriméthylammonium, le bromure de tétradécyltriméthylammonium, le sel de sodium de l'acide naphtalène sulfonique, le sel de disodium de l'acide naphtalène 1,5-disulfonique, le sel de trisodium de l'acide naphtalène trisulfonique et le caprylate de sodium, sous forme dissoute ou dispersée.

9. Procédé selon les revendications 1 à 3,
   **caractérisé en ce que** le liquide de lavage contient, en tant que composé réduisant le coefficient d'expansion [$K^{-1}$] des particules de graphite-acide sulfurique, au moins un représentant du groupe comprenant $FeSO_4$, $KMNO_4$, $H_2O_2$, $NaNO_3$, le sel de sodium de l'acide naphtalène sulfonique, le sel de disodium de l'acide naphtalène 1,5-disulfonique, le sel de trisodium de l'acide naphtalène trisulfonique, le dodécylbenzène sulfonate de sodium, et le caprylate de sodium sous forme dissoute ou dispersée.

10. Utilisation des particules de graphite-acide sulfurique thermiquement expansibles pouvant être obtenues d'après le procédé selon les revendications 1 à 9 comme additif intumescent de protection contre les incendies pour la fabrication de compositions ignifuges, en particulier pour les étanchements de protection contre les incendies, de traversées, de passages ou d'autres ouvertures dans les cloisons, les planchers et/ou les plafonds de bâtiments.

**_Fig. 1_ :** TMA - Kurve einer Schwefelsäure - Graphitintercalationsverbindung

EP 1 439 146 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4091083 A

- JP 6107405 B